# EUROPEAN PATENT SPECIFICATION

(11) **EP 1 903 014 B1**
(45) Date of publication and mention of the grant of the patent: **06.11.2013**
(21) Application number: 06291472.6
(22) Date of filing: 20.09.2006
(51) Int. Cl.: C04B 28/02, C04B 22/00, C04B 111/34

(54) **Concrete composition with reduced shrinkage**
Betonzusammensetzung mit reduzierter Schrumpfung
Composition de béton à faible retrait

(43) Date of publication of application: 26.03.2008
(73) Proprietor: LAFARGE, 75116 Paris (FR)
(72) Inventor: Chanvillard, Gilles, 38790 St. Georges d`Esperanche (FR); Boivin, Sandra, 38080 Saint Alban de Roche (FR); Guimbal, Frédéric, POTOMAC MD 20854 (US); Garcia, Denis, 34560 Montbazin (FR)
(74) Representative: Mérigeault, Shona

(56) References cited:
- EP-A- 1 081 113
- EP-A1- 1 008 568
- WO-A-99/15475
- CH-A5- 678 524
- US-A1- 2002 117 086
- US-A1- 2004 031 223
- US-B1- 6 251 179
- DATABASE WPI Week 199927 Derwent Publications Ltd., London, GB; AN 1999-323325 XP002423648 & JP 11 116315 A (TAKENAKA KOMUTEN KK) 27 April 1999 (1999-04-27) & JP 11 116315 A (TAKENAKA KOMUTEN CO) 27 April 1999 (1999-04-27)

## Description

### TECHNICAL FIELD

The present invention relates to a concrete composition, and in particular a concrete composition that can be used in flooring.

### TECHNICAL BACKGROUND

The compositions of hydraulic mixtures as used in ordinary concretes have been developed over time from the use of simple OPC (Ordinary Portland Cement), to more complex compositions that also include pozzolanic materials such as granulated blast furnace slags, fly ashes, and natural Pozzolans that permit the use of lower quantities of OPC in the concrete. These mixtures influence the properties of the resultant concrete. For example, one of the problems in the construction industry is cracking in concrete structures due to drying shrinkage. Drying shrinkage occurs when water evaporates from the hardened concrete, as is normal when the relative humidity of the environment is lower than 100%. The hydraulic mixture also adsorbs the water from the pore space as a part of the hydraulic setting of the mixture causing further shrinkage sometimes referred to as chemical shrinkage. The internal stress caused by this shrinkage can give rise to cracks and other physical and aesthetic defects in the resultant structure. As a consequence it is necessary to incorporate joints into concrete structures to relieve tensile stresses that are introduced in the structure due to the shrinkage-related volume changes. Joints are not aesthetically pleasing, and in large flat surfaces such as floors and facades there is generally a wish to reduce the number of joints necessary in the structure.

Conventional concrete has a high water to hydraulic mixture ratio of more than 0.6 in order to facilitate placing and consolidation of the concrete. The consequences of that high water content are lower compressive strength, lower abrasion resistance results, as well as the higher shrinkage in the slab.

As a result of the lower compressive strength, the floor has to be designed with increased thickness and / or with more steel reinforcement in order to carry the working loads on the slab. Increased thickness means increased material and labor cost for the project.

As a result of the lower abrasion resistance, the concrete installer uses a dry aggregate addition to the surface of the slab, referred to as a 'shake' that is troweled into the surface to increase the abrasion resistance of rolling wheel loads. The use of the dry shake requires the additional cost of these products, but also additional equipment and labor to apply and trowel them into the surface.

An alternative to steel rebar in the slab is the addition of steel fibers directly in the concrete. These fibers reduce the cost and time of installing the reinforcement in the slab on site. However there is additional time to charge the fibers in the mixer truck, the fibers make spreading and finishing of the concrete very difficult, and a shake is required in the finishing of the concrete to push the steel fibers down into the concrete away from the surface.

JP 11116315 A describes a fluid mortar containing a contraction reducing agent and a method of producing super-light-gauge, low shrinkage precast concrete panels from the mortar. The desired level of shrinkage is 200 micrometres or less per 100 mm of panel after 28 days. The production of a sample having a shrinkage of about 100 micrometres per 100 millimetres (1000 micrometres per metre, or 1 mm per metre) is exemplified.

US 2002/117086 A1 describes a cellular light weight concrete containing a shrinkage reducing agent (a synergistic mixture of an alkyl ether oxyalkylene adduct and a lower oxyalkylene glycol). According to EN 206-1 lightweight concrete has a density of below 2100 kg/m³. Cellular lightweight concrete also shows much larger drying shrinkage than regular concrete.

As a result there is a need for a concrete that can be placed without steel reinforcement or steel fibers in floor slabs in sections up to 20 meter by 20 meter square sections without cracking or joints.

Further, there is the need for an un-reinforced concrete slab with excellent abrasion resistance without the need for dry shake aggregate troweled into the surface.

Further, there is a need for an un-reinforced concrete slab with excellent abrasion resistance in reduced slab thickness for a given design load.

### SUMMARY OF THE INVENTION

Accordingly, it is a first object of the invention to provide a concrete composition comprising:
- a hydraulic binder component which comprises cement, particulate materials having a size of less than 200 µm, and an expansive agent;
- granular elements having a size greater than 500 µm;
- a shrinkage reducing agent;
- a superplasticizer; and
- water;
wherein the water to hydraulic binder ratio is from 0.1 to 0.4 by mass, the shrinkage reducing agent is present at 0.1 to 1.0% by weight of binder, and the particulate materials are present in a concentration of from 10 to 50% by total weight of binder.

According to a particular embodiment, the particulate materials comprise pozzolanic materials and / or limestone fillers.

According to a particular embodiment, the pozzolanic materials are selected from synthetic particulates such as ground blast furnace slag, fly ash, fumed silica and natural pozzolanic materials such as diatomaceous earth and calcined clays or shales or combinations thereof.

According to a particular embodiment, the cement is Portland Cement.

According to a particular embodiment, the expansive agent is selected from calcined magnesium carbonate or calcined calcium carbonate or combinations thereof.

According to a particular embodiment, the expansive agent is present in a concentration of from 2 - 10%, preferably from 3 - 6% by weight of total binder.

According to a particular embodiment, the shrinkage reducing agent is a low molecular weight glycol having the formula CₙH₂ₙ(OH)₂ where 1 <n<10, that is dispersible in water.

According to a particular embodiment, the superplastcizer is selected from sulfonated melamine-formaldehyde condensates (SMF), sulfonated naphthalene-formaldehyde condensates (SNF) modified lignosulfonates (MLS), and acrylic copolymer superplasticizers.

According to a particular embodiment, the granular elements are present in a concentration of from 1.5 to 6 times the weight of total binder, preferably from 3.5 to 4.5 times the weight of total binder.

According to a particular embodiment, the cement is present in a concentration from 215 to 450 kilograms per cubic meter, preferably from 290 to 400 kilograms per cubic meter.

According to a particular embodiment the hydraulic binder is present in a concentration from 350 to 550 kilograms per cubic meter, preferably from 425 to 475 kilograms per cubic meter.

It is another object of the invention to provide a method for the preparation of the concrete composition of the invention, comprising a first step of mixing the granular elements with the binder, a second step of adding water, a third step of adding the shrinkage reducing additive, and a final step of adding the superplasticizer.

The invention is furthermore related to a concrete object obtained by the hardening of the concrete composition of the invention.

According to a particular embodiment, said concrete object is in the form of a slab and has a maximum dimension of 20 m by 20 m and / or a minimum dimension of 5 m by 5 m.

The composition of the present invention is a concrete composition with a decrease in the w/c ratio relative to standard concrete compositions to increase compressive strength and limit the drying shrinkage. The composition further comprises an expansive agent to compensate for the chemical shrinkage, and a shrinkage reducing agent to limit the effects of drying shrinkage in order to achieve a floor slab without cracks or joints in square sections up to 20 meters by 20 meters.

### BRIEF DESCRIPTION OF THE DRAWINGS

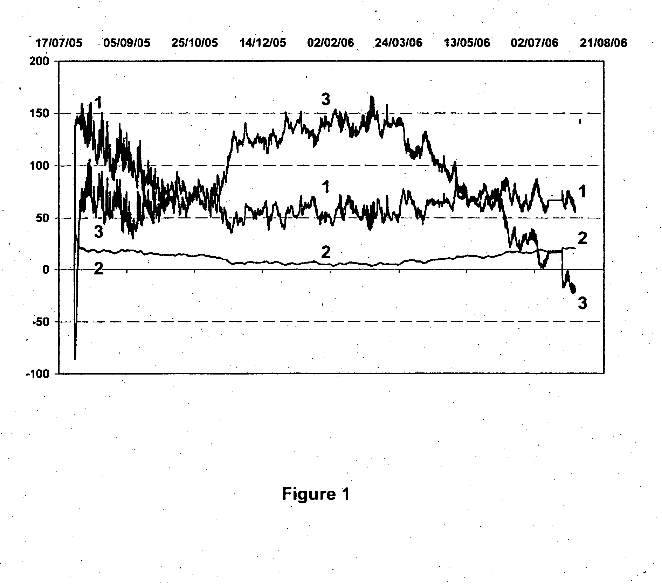

**Figure 1** shows the dimensional change of a strain gauge cast in the floor of example 1 below. The time is plotted on the x-axis (with dates indicated as day/month/year). Plot 1 corresponds to the raw data from the detector (with the dimensional change in micrometers on the y-axis). Plot 2 corresponds to the temperature data (the y-axis indicating the temperature in degrees Celcius). Plot 3 corresponds to the dimensional data from the detector after correction for the temperature (with the dimensional change in micrometers on the y-axis).

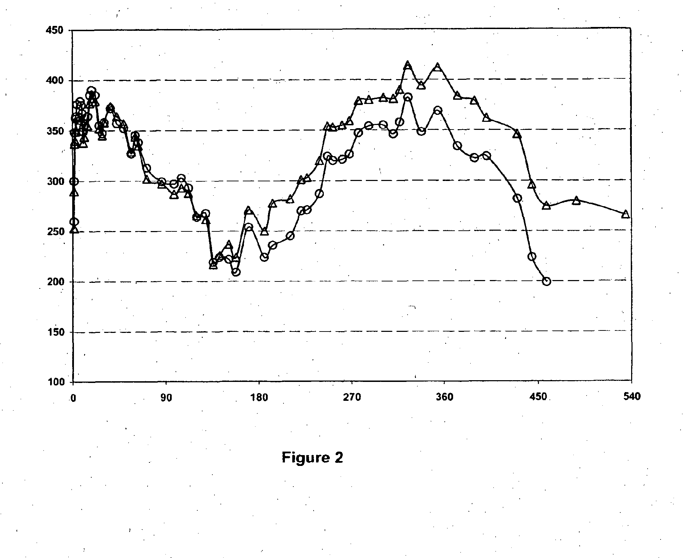

**Figure 2** shows the normalized deformation of the slab of example 2 below. The x-axis is the time in days. The γ-axis is the deformation in microns. o = deformation measured by the detector situated at + 10 m along the slab; Δ = deformation measured by the detector situated at - 10 m along the slab.

### DETAILED DESCRIPTION OF EMBODIMENTS

Hydraulic binder: In the context of the composition of the present invention by "hydraulic binder" is meant a binder composition comprising cement, particulate materials, and an expansive agent.

In particular, the cement used in the context of the composition of the present invention may be a Portland cement type as known in the art according to the EN 197-1 classification.
- I Portland cement (comprising Portland cement and up to 5% of minor addition constituents)
- II Portland-composite cement (Portland cement and up to 35% of other single constituents)
- III Blast furnace cement (Portland cement and higher percentages of blast furnace slag)
- IV Pozzolanic cement (comprising Portland cement and higher percentages of pozzolan)
- V Composite cement (comprising Portland cement and higher percentages of blast furnace slag and pozzolan or fly ash).

Where any one of type II to type V Portland cement is used, the composition of the Portland cement clinker and the other material may be calculated on the same weight basis as if they were added separately.

Particulate materials: The particulate materials are fine particles having a size of less than 200 µm, which may be defined as the particulate materials passing a screen of size 200 µm. They may be chosen among pozzolanic materials or limestone fillers or a combination of both. The particulate materials have *inter alia* the effect of slowing down cement hydration and the drying of the water in the pores.

Pozzolanic materials: Suitable materials include synthetic particulates such as ground blast furnace slag, fly ash, fumed silica and natural pozzolanic materials such as diatomaceous earth and calcined clays or shales. In the composition of the current invention the pozzolanic material is preferably present in a concentration of from 10 to 50% by total weight of binder. The particle size distribution of pozzolanic material can vary widely depending on the process.

Fine limestone fillers: Suitable limestone fillers can be ground natural or precipitated calcium carbonate. The limestone filler will typically have a D50 particle size of 2 - 50 µm, preferably between 8 - 20 µm. The limestone filler may preferably be present in a concentration of up to 30% of the weight of total binder.

In the context of the present application, by "the D50 particle size" is meant the 50^{th} percentile of the particle volumetric distribution. The D50 as defined herein may also be referred to as the DV50.

Expansive agent: The hydraulic binder comprises an expansive agent. Suitable agents include calcined magnesium carbonate or calcium carbonate ground to a fineness compatible with the cement. In the composition of the current invention the expansive additive may be present in the concentration of from 2 to 10% preferably between 3 and 6% by weight of total binder. The expansive agent normally reacts quickly, before the cement matrix has much strength. Then the long slow hydration shrinks against that expansion back to a near net shape at casting.

Granular elements: The concrete composition of the present invention comprises granular elements. Granular elements have a size of more than 500 µm, which may be defined as the granular elements being retained (oversize) with a 500 µm sieve.

Suitable types of granular elements may preferably be any single or combination of grades of hard natural or synthetic mineral in rounded or crushed form such that the D50 particle size of the combination is from 2 mm to 20 mm, preferably between 5 and 15 mm. The granular elements may be present in a concentration of from 1.5 to 5 times the weight of total binder.

Shrinkage reducing agent: The composition of the present invention comprises a shrinkage reducing agent. Suitable materials of this type are low molecular weight glycols having the formula CₙH₂ₙ(OH)₂ where 1<n<10, that are dispersible in water. Suitable low molecular weight glycols include but are not limited to ethylene glycol, diethylene glycol, triethylene glycol, propylene glycol, butylene glycol, pentylene glycol or hexylene glycol (also known as 2-methyl-2,4-pentanediol). Mixtures of these glycols may be used also. The shrinkage reducing agent is present in a concentration of from 0.1 to 4% of the weight of the total binder.

Superplasticizer: The composition of the present invention comprises a superplasticizer. Sulfonated melamine-formaldehyde condensates (SMF), sulfonated naphthalene-formaldehyde condensates (SNF) and Modified lignosulfonates (MLS) are all suitable superplasticizers that may be used in the current invention. Acrylic or methacrylic acid - base comb type copolymer superplasticizers may also be used, to which other groups like polyoxyethylene type side chains are grafted. The concentration of the superplasticizer in the composition of the present invention may be from 0.1 to 2.0% by weight of total binder.

Water: The composition of the current invention comprises water. The water may be present as expressed in a water to total binder ratio from 0.1 to 0.4, preferably from 0.2 to 0.4.

Other additives: The composition of the present invention may comprise other additives. A setting retarder may be used according to the invention in order to obtain a setting time (period between the start of setting and the end of setting) which is compatible with the desired application. Suitable retarders for use in the composition of the present invention may be chosen from among carboxylic acids like citric acid, sugars and their derivatives, calcium proteinates and calcium polyoxymethylene amine acid may be used. The concentration of the setting retarder in the present invention may be less than 0.5% of the weight of the total binder.

The composition of the present invention may further comprise natural or synthetic fibers. Fibers suitable for addition to the invention are made from polypropylene, or cellulose, as well as blended fibers. The concentration of fibers in the composition of the present invention may be less than 1% of the weight of the total binder.

The composition of the present invention may comprise a chemical defoamer. Products suitable for use in the present invention include tri-butyl phosphate. The concentration of the defoamer in the present invention may be less than 0.5% of the weight of the total binder.

Methods of preparation of the wet concrete mixture: The present invention concerns a concrete with improved properties by the inclusion of cement, particulate materials, an expansive agent, granular elements a shrinkage reducing additive a superplasticizer, and water. The invention offers much process flexibility in the mode of preparation of the composition of the present invention. There are many ways possible to carry out the preparation among which is the following:
(i) premixing the granular elements in a mixer,
(ii) adding the hydraulic binder composition,
(iii) adding the water, shrinkage reducing agent, and other additives,
(iv) adding the superplastizer
(v) mixing the resulting composition together until uniform.
   Alternatively some of the granular elements may be added to the mixer before the hydraulic binder, the shrinkage reducing additive, the superplasticizer, and the other additives if any. Then the rest of the granular elements can be added. The person of skill in the art will recognize the correct order to assure uniform mixing in the particular batching equipment.

Placing techniques: Placing techniques that are standard in the art may be used to place the wet concrete composition of the present invention. Preferably, the wet concrete that is destined for large areas- as in the case of concrete floors- is placed in long strips, in general by tail-gating. Intermediate contraction joints may be installed at specified intervals transverse to the length of the strips. In general, the wet concrete of the invention may be placed on the base at a rate at which it can be spread, bull floated or darbied and re-straightened to avoid bleeding water collecting on the surface. Spreading may be carried out by hand using shovels or preferably, by mechanical spreaders. Consolidation may be carried out by either internal or surface vibration. Screeding may be carried out by hand using a straightedge or by using a mechanical screed or by laser.

Curing techniques: Curing may be used as will be appreciated by the person skilled in the art. Regardless of the cement or the blends of cementitious materials used, concrete according to the invention is generally kept in a proper moisture and temperature condition during its early stages if it is to fully develop it strength and durability potential. The primary purpose of curing is to slow the moisture loss from the slab, so that effective hydration may occur. In general, longer curing methods are used if drying shrinkage is to be minimized. The standard curing techniques known in the art may be used to cure the objects prepared according to the invention. In particular, typical curing conditions for a concrete floor prepared according to the invention are the following:

To prevent rapid loss of moisture from slabs with a high exposed surface area to volume ratio, and to provide reserve moisture for curing, the sub-grade is pre-wetted and allowed to stand to achieve a saturated surface dry condition.

After finishing, the slab curing process may include standard water or sealing curing methods which are suitable for the curing of floor slab prepared according to the invention.

For example, water curing techniques suitable for concrete floors include ponding, sprinkling or immersion as suitable methods for slabs areas without joints. Fog spraying is a preferred method. For curing of joints wet coverings or moisture retaining coverings, for example, Burlap, or more preferably, white fiber covering may be used. Seven days of uninterrupted curing is recommended for curing objects of the invention. Standard precautions for cold and hot weather conditions may be taken if necessary. The shrinkage reducing additive may be added after the other components of the present invention. This may be carried out either by mixing with the other paste components before the object to be prepared is poured, or else the shrinkage reducing admixture may be applied to the surface of the object after it has been poured but has not yet hardened. For example, one may pour a concrete floor using standard methods and then apply the liquid admixture as a concentrated solution (of between 15 and 30%, preferably 20% by weight of water) by spraying, or brushing etc.

The mode of preparation of a concrete mixture is chosen in consideration of the particular circumstances in question; thus some of the factors that will contribute to the decision as to which method to use are the following:
- availability of the various composition components and access to mixing equipment,
- time constraints,
- transport constraints,
- size of object to be prepared,
- binder composition.

Shrinkage joint recommendations - Joints are used in slab on-ground construction to limit the frequency and width of random cracks caused by volume changes. Generally, floor maintenance can be reduced if a limitation in the number of joints or an increase in the joint spacing can be accomplished without increasing the number of cracks; for example, wear and tear on fork lifts bearings and wheels. Reduced jointing permits faster construction methods, as jointing takes extra time to finish or cut. Thus it is clearly advantageous to reduce the number of joints in the concrete slabs.

Different expert bodies, including the ASTM, ACI and NF, have recommended guidelines for joint spacing in concrete floors. The ACI recommendation for un-reinforced, plain concrete slabs is that joint spacing is 24-36 times the slab thickness up to a maximum spacing of 6 meters. With this joint spacing, random cracks may be expected to occur in 0 - 3% of the floor slab panels. In general the joint spacing in standard nominally steel reinforced concrete can be increased somewhat. In particular ACI recommendations for contraction joints at a maximum spacing of 30 times the thickness for un-reinforced slabs (for example, 3-4 m in both directions for 100 mm slabs, and 5-6 m intervals for 200 mm slabs). By using the concrete formulation of the current invention, it is possible to prepare essentially crack- free concrete slabs with joint spacing up to four times the expert recommendations. This effect is extremely important and advantageous for the reasons outlined above.

According to a further aspect of the present invention there is provided a concrete object obtainable from the concrete composition as hereinbefore defined having a maximum dimension of 20 m by 20 m.

### EXAMPLES

The following examples illustrate the invention without limiting it.

Example 1 A concrete composition contained the following materials with the following concentration:

| Component | Parts | Wt % of total binder |
|---|---|---|
| Ordinary Portland cement CEM I Hope | 100 | 66.1 |
| Ground Blast Furnace Slag - Appleby | 43 | 5.6 |
| Expansive additive - Lhoist | 8.4 | 28.3 |
| Fine sand, 0-0.6 mm (0-4 Lockington) | 286.7 | 189.6 |
| Fine limestone filler | - | - |
| Coarse aggregate 1 (4 - 10 Lockington) | 57.5 | 38.0 |
| Coarse Aggregates 2 (10 - 20 Lockington) | 230.3 | 152.2 |
| Low molecular weight glycol W.R. Grace Tetraguard | 0.67 | 0.44 |
| Superplasticizer W.R. Grace Adva 450*^{a}* | 0.42 | 0.28 |
| Rheology modifier - organic fibers | - | - |
| Retarder | - | - |
| Defoamer | - | - |
| | | |
| Water | 58.62 | 38.8 |

| | | |
|---|---|---|
| ^{a} Expressed in terms of solids content The ratio of granular elements to total binder is 3.8 | | |

The local aggregates were proven in a laboratory mixer as follows. The granular elements were mixed for 30 seconds. The binder was added and mixed for 90 seconds, the water shrinkage reduction agent was added and mixed for 30 seconds and then the superplasticizer was added and the entire batch mixed for 90 seconds. The slump was measured after mixing as follows:

| Time after mixing | Spread dia. - cm | Slump vertical- cm |
|---|---|---|
| 0:12 | 47 | 24 |
| 0:35 | 47 | 24 |
| 1:14 | 54 | 24 |
| 2:00 | 62 | 24 |

The composition was batched in a standard concrete batch plant and delivered to the site in a standard concrete truck. The concrete was cast in a 20 m x 9 m rectangle without a control joint (thickness: 17 cm). The slab was instrumented for movement in the corners and monitored for temperature and relative humidity for a year in ambient conditions during use as a logistics center inside.

The results shown in Figure 1 (with one measure per hour) are excellent and demonstrate the absence of dimensional shrinkage.

Example 2 A concrete composition contained the following materials with the following concentration:

| Component | Parts | Wt % of total binder |
|---|---|---|
| Ordinary Portland cement CEM I Val d'Azergues | 100 | 83.7 |
| Ground Blast Furnace Slag | - | - |
| Fine limestone filler - Omya Betoflow-OM | 12 | 10.1 |
| Expansive additive - Balthazar & Cotte | 7.5 | 6.3 |
| Fine sand (0-4 crushed St. Bonnet) | 150 | 125.5 |
| Fine sand (0-5 river St. Bonnet) | 50 | 41.8 |
| Coarse aggregate 1 (5 - 10 river St. Bonnet) | 90 | 75.3 |
| Coarse Aggregates 2 (10 - 20 St. Bonnet) | 145 | 121.3 |
| Low molecular weight glycol W.R. Grace Tetraguard | 0.13 | 0.105 |
| Superplasticizer Glenium 51 MBT*^{a}* | 0.5 | 0.42 |
| Rheology modifier - organic fibers | - | - |
| Retarder | - | - |
| Defoamer | - | - |
| | | |
| Water | 37.8 | 31.7 |

| | | |
|---|---|---|
| ^{a} Expressed in terms of solids content The weight ratio of dry granular elements to total binder is 3.6 | | |

The concrete was cast in a 20 m x 1 m rectangle without a control joint (thickness: 10 cm). The slab was instrumented for movement at both ends (relative to the length of the slab) and monitored for temperature and relative humidity in ambient conditions.

The results shown in Figure 2 (where the deformation is normalized with respect to a temperature of 20°C) are excellent and demonstrate the absence of dimensional shrinkage.

## Claims

1. A concrete composition comprising:
- a hydraulic binder component which comprises cement, particulate materials having a size of less than 200 µm, and an expansive agent;
- granular elements having a size greater than 500 µm;
- a shrinkage reducing agent;
- a superplasticizer; and
- water;
wherein the water to hydraulic binder ratio is from 0.1 to 0.4 by mass, the shrinkage reducing agent is present at 0.1 to 1.0% by weight of the hydraulic binder, and the particulate materials are present in a concentration of from 10 to 50% by total weight of the hydraulic binder.

2. The composition of claim 1, wherein the particulate materials comprise pozzolanic materials and / or limestone fillers.

3. The composition of claim 2 wherein the pozzolanic materials are selected from synthetic particulates such as ground blast furnace slag, fly ash, fumed silica and natural pozzolanic materials such as diatomaceous earth and calcined clays or shales or combinations thereof.

4. The composition of any one of the preceding claims wherein the cement is Portland Cement.

5. The composition of any one of the preceding claims wherein the expansive agent is selected from calcined magnesium carbonate or calcined calcium carbonate or combinations thereof.

6. The composition of any one of the preceding claims wherein the expansive agent is present in a concentration of from 2 - 10%, preferably from 3 - 6% by weight of total binder.

7. The composition of any one of the preceding claims wherein the superplastcizer is selected from sulfonated melamine-formaldehyde condensates (SMF), sulfonated naphthalene-formaldehyde condensates (SNF) modified lignosulfonates (MLS), and acrylic copolymer superplasticizers.

8. The composition of any one of the preceding claims wherein the granular elements are present in a concentration of from 1.5 to 6 times the weight of total binder, preferably from 3.5 to 4.5 times the weight of total binder.

9. The composition of any one of the preceding claims wherein the cement is present in a concentration from 215 to 450 kilograms per cubic meter, preferably from 290 to 400 kilograms per cubic meter.

10. The composition of any one of the preceding claims wherein the hydraulic binder is present in a concentration from 350 to 550 kilograms per cubic meter, preferably from 425 to 475 kilograms per cubic meter.

11. A method for the preparation of the concrete composition of any one of claims 1 to 10, comprising a first step of mixing the granular elements with the binder, a second step of adding water, a third step of adding the shrinkage reducing additive, and a final step of adding the superplasticizer.

12. A concrete object obtained by the hardening of the concrete composition of any one of claims 1 to 10.

13. The concrete object of claim 12 in the form of a slab and having a maximum dimension of 20 m by 20 m and / or a minimum dimension of 5 m by 5 m.

## Patentansprüche

1. Betonzusammensetzung, die Folgendes umfasst:
- einen hydraulischen Bindemittelbestandteil, der Zement, teilchenförmige Materialien mit einer Größe von weniger als 200 µm und ein Expansionsmittel umfasst;
- körnige Elemente mit einer Größe von mehr als 500 µm;
- ein Mittel zur Verringerung der Schrumpfung;
- einen Superverflüssiger und
- Wasser;
wobei das Verhältnis von Wasser zu hydraulischem Bindemittel 0,1 bis 0,4 ist, bezogen auf die Masse, das Mittel zur Verringerung der Schrumpfung in 0,1 bis 1,0 % vorliegt, bezogen auf das Gewicht des hydraulischen Bindemittels, und die teilchenförmigen Materialien in einer Konzentration von 10 bis 50 % vorliegen, bezogen auf das Gesamtgewicht des hydraulischen Bindemittels.

2. Zusammensetzung nach Anspruch 1, wobei die teilchenförmigen Materialien Puzzolanmaterialien und/oder Kalksteinfüllstoffe umfassen.

3. Zusammensetzung nach Anspruch 2, wobei die Puzzolanmaterialien aus synthetischen Teilchen wie gemahlene Hochofenschlacke, Flugasche, pyrogene Kieselsäure und natürlichen Puzzolanmaterialien wie Diatomeenerde und gebrannten Tonen oder Schiefertonen oder Kombinationen davon ausgewählt sind.

4. Zusammensetzung nach einem der vorhergehenden Ansprüche, wobei der Zement Portlandzement ist.

5. Zusammensetzung nach einem der vorhergehenden Ansprüche, wobei das Expansionsmittel aus gebranntem Magnesiumcarbonat oder gebranntem Calciumcarbonat oder Kombinationen davon ausgewählt ist.

6. Zusammensetzung nach einem der vorhergehenden Ansprüche, wobei das Expansionsmittel in einer Konzentration von 2 - 10 %, vorzugsweise 3 - 6 % vorliegt, bezogen auf das Gewicht des gesamten Bindemittels.

7. Zusammensetzung nach einem der vorhergehenden Ansprüche, wobei der Superverflüssiger aus sulfonierten Melamin-Formaldehyd-Kondensaten (SMF), sulfonierten Naphthalin-Formaldehyd-Kondensaten (SNF), modifizierten Lignosulfonaten (MLS) und Acryl-Copolymer-Superverflüssigern ausgewählt ist.

8. Zusammensetzung nach einem der vorhergehenden Ansprüche, wobei die körnigen Elemente in einer Konzentration vorliegen, die das 1,5- bis 6-fache des Gewichts des gesamten Bindemittels, vorzugsweise das 3,5- bis 4,5-fache des Gewichts des gesamten Bindemittels ausmacht.

9. Zusammensetzung nach einem der vorhergehenden Ansprüche, wobei der Zement in einer Konzentration von 215 bis 450 Kilogramm pro Kubikmeter, vorzugsweise 290 bis 400 Kilogramm pro Kubikmeter vorliegt.

10. Zusammensetzung nach einem der vorhergehenden Ansprüche, wobei das hydraulische Bindemittel in einer Konzentration von 350 bis 550 Kilogramm pro Kubikmeter, vorzugsweise 425 bis 475 Kilogramm pro Kubikmeter vorliegt.

11. Verfahren zur Herstellung der Betonzusammensetzung nach einem der Ansprüche 1 bis 10, das einen ersten Schritt des Mischens der körnigen Elemente mit dem Bindemittel, einen zweiten Schritt des Zugebens von Wasser, einen dritten Schritt des Zugebens des Additivs zur Verringerung der Schrumpfung und einen letzten Schritt des Zugebens des Superverflüssigers umfasst.

12. Betongegenstand, der durch das Aushärten der Betonzusammensetzung nach einem der Ansprüche 1 bis 10 erhalten wird.

13. Betongegenstand nach Anspruch 12 in der Form einer Platte und mit einer Höchstabmessung von 20 m mal 20 m und/oder einer Mindestabmessung von 5 m mal 5 m.

## Revendications

1. Composition de béton comprenant :
- un liant hydraulique qui comprend du ciment, des matières particulaires ayant une taille inférieure à 200 µm, et un agent expansif ;
- des éléments granulaires ayant une taille supérieure à 500 µm ;
- un agent de réduction du retrait ;
- un superplastifiant ; et
- de l'eau ;
dans laquelle le rapport massique eau/liant hydraulique est de 0,1 à 0,4, l'agent de réduction du retrait est présent à raison de 0,1 à 1,0 % en poids du liant hydraulique, et les matières particulaires sont présentes à une concentration de 10 à 50 % en poids total du liant hydraulique.

2. Composition selon la revendication 1, dans laquelle les matières particulaires comprennent des matières pouzzolaniques et/ou des fillers calcaires.

3. Composition selon la revendication 2, dans laquelle les matières pouzzolaniques sont choisies parmi les particules synthétiques telles que les laitiers de haut-fourneau broyés, les cendres volantes, la fumée de silice, et les matières pouzzolaniques naturelles telles que la terre de diatomées et les argiles ou schistes calcinés ou des mélanges de ceux-ci.

4. Composition selon l'une quelconque des revendications précédentes, dans laquelle le ciment est du ciment de Portland.

5. Composition selon l'une quelconque des revendications précédentes, dans laquelle l'agent expansif est choisi parmi le carbonate de magnésium calciné ou le carbonate de calcium calciné ou des mélanges de ceux-ci.

6. Composition selon l'une quelconque des revendications précédentes, dans laquelle l'agent expansif est présent à une concentration de 2 à 10 %, de préférence de 3 à 6 % en poids de liant total.

7. Composition selon l'une quelconque des revendications précédentes, dans laquelle le superplastifiant est choisi parmi les condensats sulfonés de mélamine-formaldéhyde (SMF), les lignosulfonates modifiés (MLS), des condensats sulfonés de naphtalène-formaldéhyde (SNF), et les superplastifiants de copolymère acrylique.

8. Composition selon l'une quelconque des revendications précédentes, dans laquelle les éléments granulaires sont présents à une concentration de 1,5 à 6 fois le poids de liant total, de préférence de 3,5 à 4,5 fois le poids de liant total.

9. Composition selon l'une quelconque des revendications précédentes, dans laquelle le ciment est présent à une concentration de 215 à 450 kilogrammes par mètre cube, de préférence de 290 à 400 kilogrammes par mètre cube.

10. Composition selon l'une quelconque des revendications précédentes, dans laquelle le liant hydraulique est présent à une concentration de 350 à 550 kilogrammes par mètre cube, de préférence de 425 à 475 kilogrammes par mètre cube.

11. Procédé de préparation de la composition de béton selon l'une quelconque des revendications 1 à 10, comprenant une première étape de mélange des éléments granulaires avec le liant, une deuxième étape d'ajout d'eau, une troisième étape d'ajout de l'additif de réduction de retrait, et une dernière étape d'ajout du superplastifiant.

12. Objet en béton obtenu par durcissement de la composition de béton selon l'une quelconque des revendications 1 à 10.

13. Objet en béton selon la revendication 12 sous la forme d'une dalle et ayant une dimension maximale de 20 m par 20 m et/ou une dimension minimale de 5 m par 5 m.
